# EUROPEAN PATENT APPLICATION

(11) **EP 4 015 057 A1**
(43) Date of publication of application: **22.06.2022**
(21) Application number: 20383105.2
(22) Date of filing: 16.12.2020
(51) Int. Cl.: B01D 1/14, B01D 1/18

(54) **METHOD AND SYSTEM FOR TRANSFORMING STICKY FLUID SUBSTANCES INTO FREE-FLOWING SOLUBLE POWDER**

(71) Applicant: EKONEK Innovación en Valorización en Subproductos, S.L., 20100 Errenteria (ES)
(72) Inventor: Lekuona, Aritz, 20100 Errenteria (ES); Alberdi, Mikel, 20100 Errenteria (ES)
(74) Representative: Balder IP Law, S.L.

(57) **Abstract**

Examples refer to a method and a system for transforming a sticky fluid substance into a free-flowing soluble powder. The method comprises feeding the sticky fluid substance into a mixing chamber; mixing the sticky fluid substance with at least one soluble mineral salt into the mixing chamber; and drying the mixture into a drying chamber with hot air at a drying temperature selected from a range between 50°C and 150°C until the mixture is transformed into the free-flowing soluble powder. The drying temperature is the temperature of the hot air at the outlet of the drying chamber.

## Description

### TECHNICAL FIELD

In general, the present invention relates to methods and systems for treating pasty and sticky liquid substances, such as pasty and sticky waste substances, to transform them into free-flowing soluble powder. More particularly, the present invention refers to a method and system for transforming sticky fluid substances into free-flowing soluble powder by mixing the sticky fluid substances with mineral salts and drying the mixture until it is transformed into the free-flowing soluble powder. The resulting free-flowing soluble powder can be used as a soluble fertilizer or soluble biostimulant for plants, among other possible uses or applications.

### STATE OF THE ART

Drying/dewatering of gluey or sticky fluids represents an important problem within the technical field of industrial drying, and there are no known technical solutions within the prior art that are able to solve this problem satisfactorily. Drying of such materials today involves mixing the sticky fluids with big amounts of carrier materials like maltodextrin, silica, etc., which may cause alienation of the dried product from its intended purpose and/or increase drying costs. Alternatively, very high air flows could be used to dry the sticky fluids such that very low temperature and relative humidity are reached in the exhaust air of the dryer. This alternative solution worse dramatically the energy efficiency of the drying process. In both scenarios, drying becomes economically prohibitive for most applications.

Typical materials which display such gluey or sticky characteristics are moist materials within animal and vegetable processing, and different forms of residual sludge, such as different forms of industrial sludge, sludge from biological effluent treatment plants and sludge from column residues from alcohol production.

Besides, many liquids, pasty organic substances or by-products, like olive vegetable water, or acidified cheeses whey, etc., have an interesting potential to be valuable products when they are dried. These dried products can be applied, for example, in the fertilizer market as soluble fertilizing powders or granules. This is because they have nutrients (Nitrogen (N), Phosphorus (P), Potassium (K), etc.) or other components (humic acids, organic acids, sugars...) that can enhance plant productivity or health.

In many cases, these pasty and sticky organic liquid substances or by-products are obtained in industrial processes as the waste resulting from such processes. This is the case of the mentioned olive vegetable water or acidified cheeses whey, among many other waste subproducts.

Nevertheless, drying those materials can be very complicated and economically unfeasible, because the starting materials and/or the resulting dried material (the solid material or powder that is generated) can be sticky, making handling of the product difficult or impossible and increasing the drying and handling costs.

The sticky behaviour of these fluid substances is because many of this type of organic wastes have a significant amount of components like organic acids, sugars, polyphenols, etc., that lower the glass transition temperature (T_{g}) of the dried product, making the dried product sticky and non-free-flowing. The glass transition temperature is the temperature above which hard amorphous solids will transform into soft, rubbery materials due to increase in mobility/decrease of viscosity. In particular, when a material is dried in a powder form, and when the drying process temperature is above the T_{g} of the dried material, the powder gets into a rubbery state that has a sticky behaviour. Drying air outlet temperatures (drying temperatures) in conventional hot air-based dryers like spray dryers, fluid bed dryers, pulse combustion dryers, etc., are typically around 70-120°C, but sticky powders have T_{g} values between 15 and 70°C. Therefore, when these pasty and sticky fluid substances are dried in these conventional hot-air based dryers, the resulting dried product still keeps its sticky and pasty behaviour.

In addition, such sticky materials will stick to the heating surfaces and internal walls of the drying device in which they are being dried which makes their extraction from the drying devices significantly complicated. As mentioned before, big amounts of carriers or very energy inefficient conditions have to be applied to make the drying of those materials feasible.

Therefore, there is still a need in the state of the art for methods and systems that are able to produce free-flowing products from pasty and sticky liquid substances, whose treatment and/or disposal is currently very complex and expensive, and that are able to valorise said sticky and pasty liquid substances, which are generally waste products.

### DESCRIPTION OF THE INVENTION

The present invention addresses the above cited technical problems by adding certain soluble mineral salts to the pasty and sticky liquid substance, and then, by drying the mixture until it is transformed into a free-flowing soluble powder. As used herein "sticky liquid substance" refers to any liquid or pasty organic waste or by-product from vegetable and animal processing, waste or by-products from the food industry or any other product or material that have a sticky behaviour when dried, and/or that has a glass transition temperature lower than 90°C when dried in a powder form.

A first object of the invention is a method for transforming a sticky fluid substance into a free-flowing soluble powder. Said method comprises the steps of feeding the sticky fluid substance into a mixing chamber, mixing the sticky fluid substance with at least one soluble mineral salt into the mixing chamber and drying the mixture into a drying chamber with hot air at a drying temperature selected from a range between 50°C and 150°C, and more preferably between 70°C and 120°C, until the mixture is transformed into the free-flowing soluble powder. As used herein, the drying temperature, i.e., the temperature of the hot air at which the sticky fluid substance is dried within the drying chamber is the temperature of the hot air at the outlet of the drying chamber and then, at the outlet of the dryer. That is to say, the hot air generally enters the drying chamber (inlet hot air) at a temperature that is significantly higher than the temperature at which it exits the drying chamber (outlet hot air). For example, the hot air generated by a drying unit of the dryer may enter within the drying chamber at a temperature that ranges between 200-700°C (or even higher) but it is quickly cooled upon contact with a fluid, e.g., water, that is sprayed inside the drying chamber so the outlet hot air temperature ranges between 50-150°C. This outlet hot air temperature is the drying temperature of the drying process.

This drying temperature may be constant or may vary within the mentioned range during the drying step depending on the physical and chemical properties of the particular sticky fluid substance and of the particular at least one mineral salt. By drying the mixture at temperatures within the cited ranges, the drying step becomes more feasible and efficient in terms of time and energy consumption. The time during which the drying step is carried out will depend on the specific physical and chemical properties of the sticky fluid substance and the at least one mineral salt. Preferably, the drying step may take between 1 second and 30 minutes, although it may also take longer.

The at least one mineral salt may be composed by only one mineral salt or may contain a combination of mineral salts. By adding the mineral salts to the sticky fluid substance, the glass transition temperature (T_{g}) of the mixture is increased relative to the T_{g} of the starting sticky fluid substance, so that the resulting powder is free-flowing, i.e., non-sticky. For example, the glass transition temperature (T_{g}) of the resulting free-flowing soluble powder made from a sticky fluid substance can be increased from 40°C (T_{g} of the dried sticky fluid substance without addition of mineral salts) to 120°C (T_{g} of the obtained free-flowing soluble powder) by adding 5 or 10% in weight of one mineral salt on dry bases (this percentage depends on the type of sticky fluid substance and the type of mineral salt), avoiding the sticky behaviour of the powder and making it free-flowing.

In some embodiments, the method comprises mixing the sticky fluid substance with the at least one soluble mineral salt into the mixing chamber at a temperature that ranges between 15°C and 80 °C and during a time period that ranges between 0,1 and 10 hours. This temperature may be constant or may vary within the mentioned range during the mixing step depending on the specific physical and chemical properties of the sticky fluid substance and the at least one mineral salt. The time during which the mixing step is carried out will also depend on the specific physical and chemical properties of the sticky fluid substance and the at least one mineral salt. By heating the sticky fluid substance with the at least one soluble mineral salt during the mixing step, the soluble mineral salts are better dissolved in the sticky fluid substance so the mixing operation is facilitated and the resulting mixture is more homogeneous.

In some embodiments, the at least one soluble mineral salt is at least one soluble mineral fertilizer. By adding a mineral fertilizer or a combination of mineral fertilizers to the sticky fluid substance, the nutrient content in the final powder is enhanced to a desired level. In this way, the free-flowing soluble powder obtained is specially indicated to be used as a fertilizer. In other words, by adding the mineral fertilizer or a combination of mineral fertilizers to the sticky fluid substance, the fertilizer value of the final powder is significantly enhanced contributing to the valorisation of the resulting free-flowing soluble powder.

In some embodiments, the at least one soluble mineral fertilizer may be any soluble sulphate, any soluble phosphate, potassium chloride or ammonium chloride. More preferably, the at least one soluble mineral fertilizer can be selected from a group comprising ammonium sulphate, diammonium phosphate, magnesium sulphate, potassium sulphate, ammonium phosphate, potassium phosphate, potassium chloride, ammonium chloride and any combination thereof. Other mineral fertilizers such as mineral N+P+K blends could be also used.

In some embodiments, the amount of mineral salt added to the mixture ranges from 1 to 30% in weight of the free-flowing soluble powder. The amount of mineral salt added to the mixture will depend on the specific physical and chemical properties of the mineral fertilizer added and the specific physical and chemical properties of the sticky fluid substance.

In some embodiments, the method comprises feeding the hot air coming out the drying chamber with the free-flowing soluble powder in suspension into a powder recovery cyclone and/or a bag filter to separate/precipitate/recover the free-flowing soluble powder. Thus, the outlet of the drying unit or dryer in which the drying step is carried out may be connected to the inlet of the powder recovery cyclone or bag filter wherein the powder precipitates/is separated or recovered.

In some embodiments, prior to mixing the substance with the at least one soluble mineral salt, the method comprises filtering the sticky fluid substance to eliminate particles, e.g., solids or fibers, with a size (e.g., diameter) greater than 2 mm, and more preferably greater than 0,2 mm. Particles with a size smaller than 0,2 mm may be also eliminated in the filtering step. The filtering device that could be used for filtering the sticky fluid substance before it is fed to the mixing chamber may be a screw press, a microfiltration device or a decanter centrifuge, among others. Therefore, the outlet of the filtering device may be fluidly connected to the inlet of the mixing chamber. By filtering the sticky fluid substance, a more homogeneous mixture is obtained, and then, a more homogenous and high-quality free-flowing soluble powder is obtained.

In some embodiments, prior to mixing the substance with the at least one soluble mineral salt, the method comprises evaporating at least part of the humidity contained into the sticky fluid substance. Those sticky fluid substances having a relatively low dry matter content (e.g., from 3 to 15% dry matter), can be concentrated using an evaporator, to reach a dry matter content of 30, 40, 50 or 60%, depending on the specific physical and chemical properties of the sticky fluid substance. This evaporation step will enhance the energetic performance of the overall transformation process. The evaporator may incorporate mechanical compression means, multistage or heat pump means for evaporating part of the humidity of the sticky fluid substance.

In some embodiments, the method may comprise a granulating step in which the free-flowing soluble powder is converted into granules in a granulating unit or device. This granulating unit may be, for example, a fluid bed granulator, a spouted bed granulator, a pan granulator, an extruder, or the like.

In some embodiments, the method may comprise a compacting step in which the free-flowing soluble powder is compacted in a compacting unit or device. This compacting unit may be a fluid bed dryer, a spouted bed dryer, an extruder, or the like.

In some embodiments, the method may comprise a pelletizing step in which the free-flowing soluble powder is converted into pellets in a pelletizing unit or device. This pelletizing unit may be, for example, a fluid bed pelletizer, a spouted bed pelletizer, a pan pelletizer, an extruder, or the like.

A second object of the invention is a system for transforming a sticky fluid substance into a free-flowing soluble powder. The system comprises a mixer having a mixing chamber that is configured to receive the sticky fluid substance and at least one soluble mineral salt, and to mix the sticky fluid substance with the at least one soluble mineral salt forming a mixture. For example, the mixer may be a batch agitated tank, among many other mixing devices. Said mixer will have at least two inlet ports to receive the sticky fluid substance and the at least one mineral salt, respectively. The mixer may have one inlet port for receiving the sticky fluid substance and one inlet port for receiving each mineral salt of the combination of mineral salts that are added to the mixture. The mixer may further comprise a heating device or mechanism to heat the mixture during the mixing process at a temperature that ranges between 15 and 80 °C, depending on the physical and chemical characteristics of the sticky fluid substance and of the mineral salts added. The mixing operation may take between 0,1 and 10 hours also depending on the physical and chemical characteristics of the sticky fluid substance and the mineral salts.

The system also comprises a dryer including a drying chamber that is configured to receive the mixture and to dry the mixture with hot air at a drying temperature that ranges between 50°C and 150°C, and more preferably between 70°C and 120°C, until the mixture is transformed into the free-flowing soluble powder. The drying temperature is the temperature of the hot air at the outlet of the drying chamber. The dryer may be a Spray Dryer, a Pulse Combustion Dryer or a Spouted Bed Dryer which are well-known technologies able to provide a precise temperature control inside the drying chamber. This precise temperature control prevents large temperature variations inside the chamber and overheating the mixture resulting in an improvement of the obtained free-flowing soluble powder. The mixture can be dried and granulated in a Spouted Bed Dryer to have a granulated soluble free-flowing dry material, obtaining round dry granules. In all cases, air temperature exhausting the drying chamber (drying temperature) can vary from 50 to 150°C depending on the physical and chemical characteristics of the sticky fluid substance and the mineral salts. Preferably, the dryer will be a Pulse Combustion Dryer because it requires lower energy consumption per kg of water evaporated, and because it can handle more concentrated or more viscous mixtures.

The system also comprises means for transporting the mixture from the mixing chamber of the mixer to the drying chamber of a dryer. These means for transporting the mixture from the mixing chamber of the drying chamber may a pumping mechanism, a belt or an endless screw, among other mechanisms.

In some embodiments, the system may comprise a cyclone and/or a bag filter fluidly connected at the outlet of the drying chamber and being configured to receive the hot air with the free-flowing soluble powder in suspension from the drying chamber and to precipitate or separate the free-flowing soluble powder.

In some embodiments, the system comprises a filtering unit (screw press, microfiltration or decanter centrifuge) that is configured to eliminate particles from the sticky fluid substance, with a size (e.g., diameter) greater than 2 mm, and more preferably greater than 0,2 mm.

In some embodiments, the system comprises an atomizer unit or device (nozzle atomizer, rotary disc atomizer or pulse combustion atomizer) that is configured to atomize/spray the mixture into the drying chamber of the dryer, such that the atomized mixture is dried by the hot air generated by the dryer. In such embodiments, the atomized mixture is mixed with the hot air generated by the dryer and fed into the drying chamber.

In some embodiments, the system comprises a waste heat recovery system that is configured to recover the waste heat contained in the exhaust air of the dryer, preferably, after separating or precipitating the soluble powder. That waste heat can be directed to an evaporator (i.e., evaporation system) that is used to evaporate at least part of the humidity contained into the sticky fluid substance. In other words, the evaporating system concentrates the sticky fluid substance when its dry matter is under a predefined threshold. This waste heat may be used in other steps of the drying process. For example, this waste heat could be used to heat the mixing chamber or may be used to heat the air coming into the drying chamber too. By using this waste heat recovery system, the energy efficiency of the overall process is significantly increased.

The method and system for transforming a sticky fluid substance into a free-flowing soluble powder herein described present several advantages and/or differences compared with previous devices and techniques. In particular,
- The most frequently used carriers to increase T_{g} and make the drying possible (maltodextrine, silicon dioxide, etc) are replaced by more economical carriers (mineral salts);
- T_{g} of the dried powder is kept relatively high (above 80 or 100°C), allowing free-flowing of powder in more energetically efficient conditions for the drying process;
- Using mineral salts that contain nitrogen, phosphorus, potassium and/or magnesium, as a carrier, enhances the fertilizer value of the final free-flowing soluble powder. Moreover, the organic acids, aminoacids, etc., that the sticky fluid substance may contain, can add biostimulant properties to the final powder;
- Filtering the sticky fluid substance before drying, makes a soluble final powder, enhancing the applicability as a fertilizer and/or as a biostimulant for plants; and
- Using the waste heat of the drying process into the evaporation step before drying, enhances the overall energy efficiency of the drying process.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out.

The drawings comprise the following figures:
Figure 1 shows a flow diagram of the method for transforming a sticky fluid substance into a free-flowing soluble powder, according to an embodiment of the invention.
Figure 2 shows a flow diagram of the method for transforming a sticky fluid substance into a free-flowing soluble powder including the evaporating, filtering and separating/precipitating steps, according to another embodiment of the invention.
Figure 3 shows a system for transforming a sticky fluid substance into a free-flowing soluble powder, according to a particular embodiment of the invention.
Figure 4 shows the system for transforming a sticky fluid substance into a free-flowing soluble powder of Figure 3, including a cyclone and a bag filter.
Figure 5 shows the system for transforming a sticky fluid substance into a free-flowing soluble powder of Figure 4, including an evaporator and a waste heat recovery system.

### DETAILED DESCRIPTION OF THE INVENTION

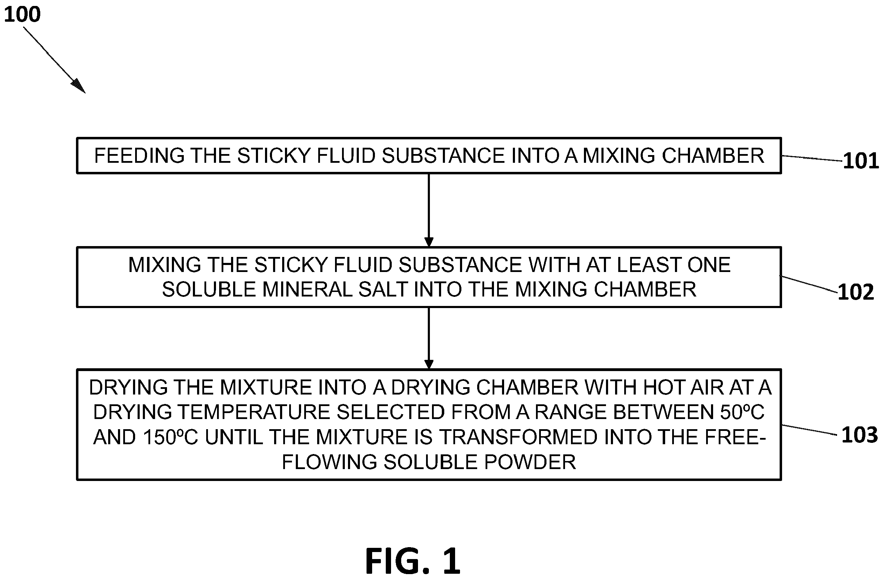

Figure 1 shows a flow diagram of the method 100 for transforming a sticky fluid substance into a free-flowing soluble powder, according to an embodiment of the present invention.

At step 101 of the method 100, the sticky fluid substance is fed into a mixing chamber of a mixer. The sticky fluid substance may be fed inside the mixing chamber via a first inlet port of the mixer. This sticky fluid substance may be provided from a reservoir or tank from where said sticky fluid substance may be pumped or transported by belts, endless screws or similar. Alternatively, the sticky fluid substance may be manually fed to the mixing chamber.

At step 102 of the method 100, the sticky fluid substance is mixed with at least one soluble mineral salt into the mixing chamber of the mixer. Thus, the at least one mineral salt is also fed into the mixing chamber via a second inlet port of the mixer. The mineral salt may be also provided from a reservoir or tank from where said mineral salt may be pumped or transported by belts, endless screws or similar. Alternatively, the mineral salt may be manually fed to the mixing chamber. This step 102 may be carried out at a predefined temperature so that the mixing chamber may comprise heating means to maintain the temperature inside the chamber at a predefined temperature or within a predefined range of temperatures. Having the mixture at the predefined temperature, that for example may range between 15-80°C, facilitates the dilution of the soluble mineral salts in the sticky fluid substance so the mixing operation is enhanced and the resulting mixture is more homogeneous.

At step 103 of the method 100, the mixture is dried into a drying chamber of a dryer with hot air at a drying temperature until the mixture is transformed into the free-flowing soluble powder. This hot air is generated by a heating unit of the dryer and fed into the drying chamber. The drying temperature is the temperature of hot air, previously generated by the drying unit of the dryer, at the outlet of the drying chamber. This drying temperature is selected from a range between 50°C and 150°C, and more preferably between 70°C and 120°C. This drying temperature may be constant or may vary within the mentioned range during the drying step depending on the physical and chemical properties of the particular sticky fluid substance and of the particular at least one mineral salt. By adding the mineral salts to the sticky fluid substance, the glass transition temperature (T_{g}) of the mixture is increased relative to the T_{g} of the starting sticky fluid substance, so that the resulting dried powder is free-flowing, i.e., non-sticky.

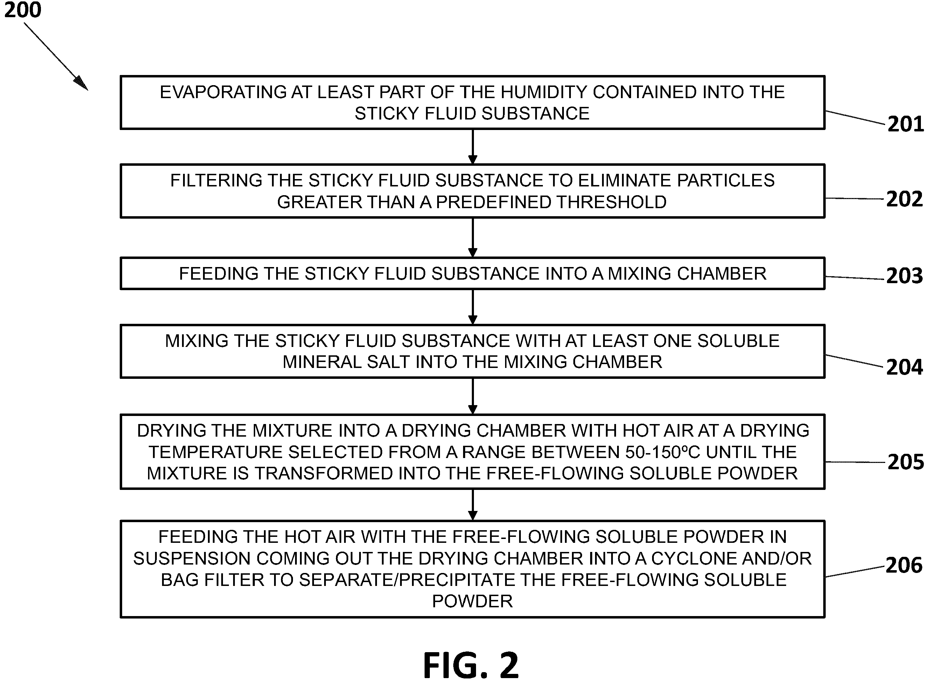

Figure 2 shows another flow diagram of a method 200 for transforming a sticky fluid substance into a free-flowing soluble powder including the evaporating, filtering and separating/precipitating steps, according to another embodiment of the invention.

At step 201 of the method 200, the sticky fluid substance is fed into an evaporator to evaporate at least part of the humidity contained into the sticky fluid substance. This step 201 will be especially useful when the starting sticky fluid substance has a low dry matter content.

At step 202 of the method 200, the sticky fluid substance is filtered to eliminate particles with a size greater than a predefined threshold, for example, particles with a size greater than 0,1 mm or any other size. The filtered sticky fluid substance has a more homogenous granularity that will facilitate its mixing with the mineral salts.

Steps 203-205 of the method 200 corresponds to steps of 101-103 of the method 100 of Figure 1.

At step 206 of the method 200, the hot air coming out from the dryer (exhaust hot air) that contains the free-flowing soluble powder in suspension is fed into a cyclone and/or a bag filter to precipitate/separate the free-flowing soluble powder. Besides, the hot air at the outlet of the cyclone and/or the bag filter may be fed into a waste heat recovery system to recover waste heat contained in such exhaust hot air that could be used in any of the preceding steps. For example, said recovered waste heat could be used to heat the mixing chamber, the air entering the drying chamber or to feed the evaporator.

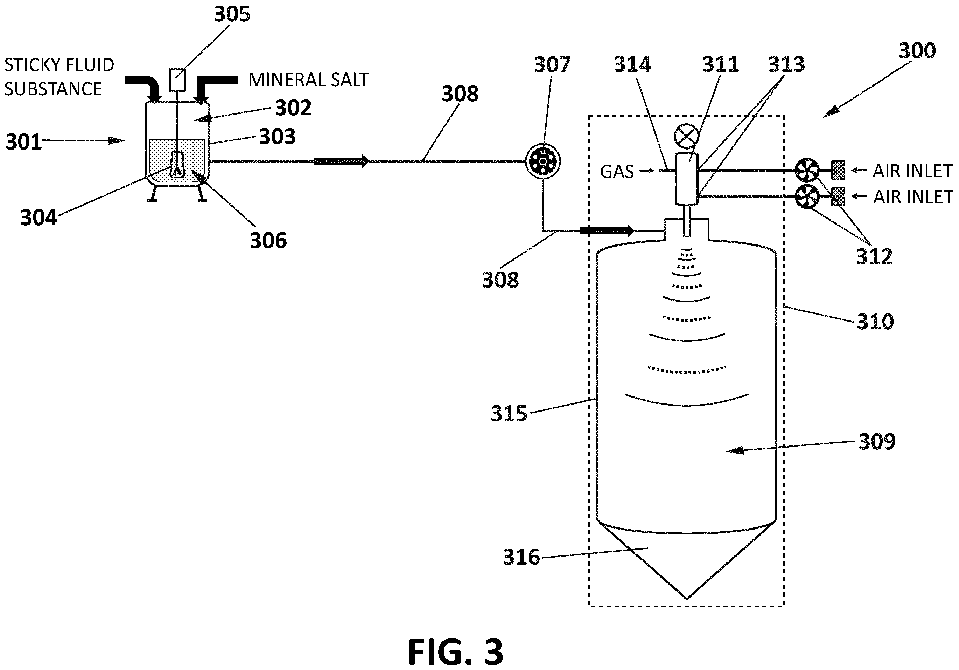

Figure 3 shows a system 300 for transforming a sticky fluid substance into a free-flowing soluble powder, according to a particular embodiment of the invention. It should be understood that the system 300 of Figure 3 may include additional components and that some of the components described herein may be removed and/or modified without departing from a scope of the described system 300. Additionally, implementation of the system 300 is not limited to such embodiment.

The sticky fluid substance, e.g., olive vegetable water, ant the mineral salt, e.g., ammonium sulphate, are fed into the mixing chamber 302 of a mixer 301. The mixing chamber 302 is the space defined by a mixing vessel 303 of the mixer 301. For example, both components of the mixture, olive vegetable water and ammonium sulphate, are fed in a ratio 90-10% in weight of the resulting free-flowing powder, respectively. The mixer 301 comprises a mixing device 304, e.g., a wire whip, wire beater or similar, actuated by a motor 305 to mix the olive vegetable water and the ammonium sulphate creating the mixture 306.

The mixture 306 is then pumped by a low-pressure pump 307 through respective pipes or conduits 308 to fed the drying chamber 309 of the dryer 310. The dryer 310 is a pulse combustion dryer that incorporates a pulse combustion burner 311. The pulse combustion burner 311 is an air heating and mixture atomizing unit, that comprises a pulse combustion heater and atomizer, that is configured to simultaneously generate the hot air for drying the mixture 306 and atomize or spray the mixture 306 to facilitate its drying operation. This pulse combustion burner 311 receives air from two low flow air blowers 312 via respective air inlets 313 that is heated until said heated air enters into the combustion chamber of the pulse combustion burner 311. Then, gas is also injected into the combustion chamber, said gas coming from a gas source (not shown in this figure), that enters the combustion chamber via a gas inlet 314. Then, the gas is ignited inside the combustion chamber generating a sonic wave that leaves the combustion chamber through a tail pipe together with the combustion heat generating heating pulses that impact the liquid mixture that is being injected at the end of the tail pipe. This cycle is repeated more than 100 times per second generating more than 100 heating pulses per second. This heating pulses break the liquid mixture into thousands of droplets generating a spray of fine droplets that goes inside the drying chamber 309, drying the mixture. Therefore, the mixture 306 of olive vegetable water and ammonium sulphate is dried inside the drying chamber by the heating pulses generated by the pulse combustion burner 311 creating the free-flowing soluble powder. This free-flowing soluble powder may precipitate to the bottom portion 316 of the vessel 315 that delimits the drying chamber 309. The bottom portion 316 of the vessel 315 may have the shape of an inverted cone so the precipitated powder moves towards the tip wherein the powder can be easily collected.

While the system 300 of Figure 3 shows a low-pressure pump 307 with its corresponding conduits 308 to transport the mixture from the mixer 301 to the dryer 310, the system may alternatively comprise endless screws or belts, among other transporting mechanism, to transport the mixture. Moreover, while the system 300 incorporates a pulse combustion dryer 310 with a pulse combustion burner 311, the system may comprise other drying units such as a spouted bed dryer, a spray dryer or any other device able to dry the mixture until transforming it into powder or granules.

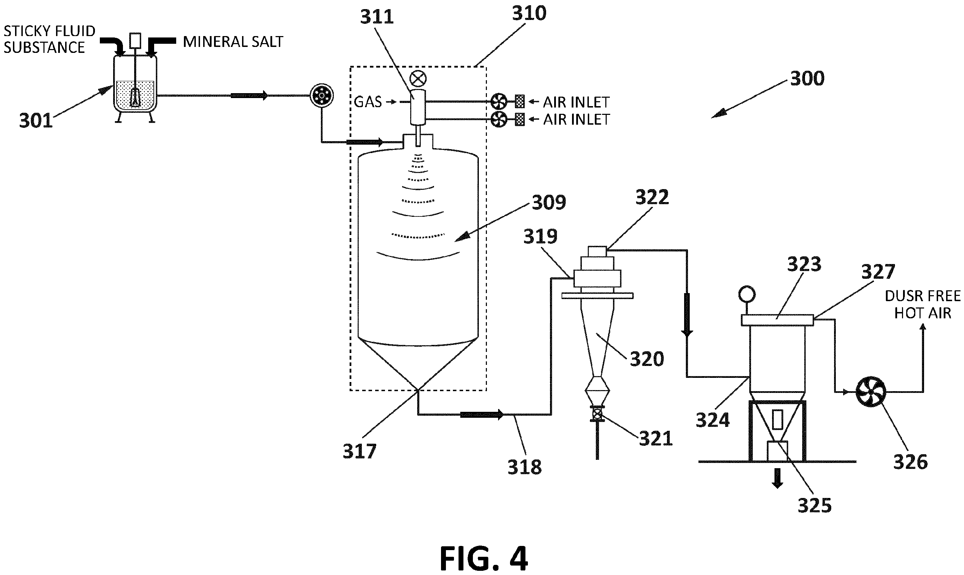

Figure 4 shows the system 300 for transforming a sticky fluid substance into a free-flowing soluble powder of Figure 3 including a cyclone and a bag filter, according to another embodiment of the invention.

In such embodiment, the outlet port 317 of the drying chamber 309 is connected via a conduit or pipe 318 to the inlet port 319 of a recovery cyclone 320. The cyclone 320 receives the hot air with the free-flowing soluble powder in suspension from the pulse combustion dryer 310 and precipitates at least part of the free-flowing soluble powder that exits the cyclone 320 via the outlet port 321 located in its lower portion. The precipitated powder may be stored in a discharge drum (not shown in this figure) located at the outlet port 321. The exhaust air from the cyclone 320 exits through an air outlet port 322 located at the top portion of the cyclone 320. This exhaust air still contains powder in suspension. Thus, this exhaust air enters into a bag filter 323 through an air inlet port 324, where the powder in suspension is recovered exiting only powder-free air (dust-free hot air) from the bag filter 323 via its air outlet port 327. This recovered powder may be stored in another discharge drum (not shown in this figure) located at the outlet port 325 in the lower portion of the bag filter 323.

The system further comprises an aspiration fan 326 fluidly connected with the air outlet port 327 of the bag filter 323 to help the hot air from the drying unit 309 to reach the bag filter 323.

While the system 300 of Figure 4 incorporates a cyclone 320 and a bag filter 323 connected in series at the outlet 317 of the drying chamber 309, in some other implementations, the system may only comprise one or more cyclones connected in series, only one or more bag filters connected in series or any combination of cyclones and bag filters connected in series at the outlet of the drying chamber. Alternatively, the system may comprise other systems for recovering the powder and dust from the exhaust hot air.

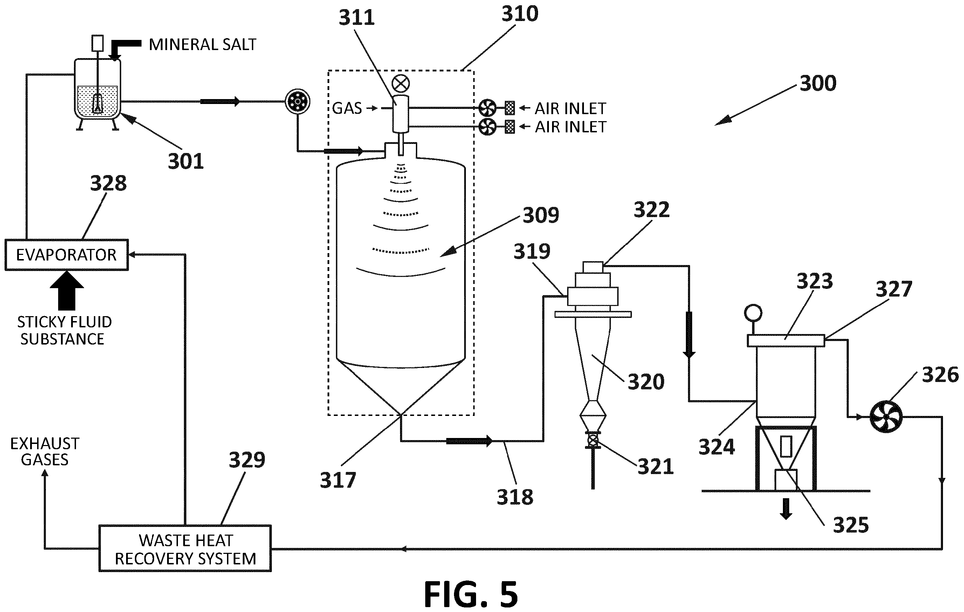

Figure 5 shows the system 300 for transforming a sticky fluid substance into a free-flowing soluble powder of Figure 4, including an evaporator and a waste heat recovery system.

Prior to mixing the olive vegetable water with the ammonium sulphate, the olive vegetable water is concentrated by evaporating at least part of the humidity contained into it. The evaporator 328 reduces the humidity concentration of the olive vegetable water until it reaches a dry matter content of 30, 40, 50 or 60%. This evaporation step enhances the energetic performance of the overall transformation process. The evaporator may incorporate mechanical compression means, multistage or heat pump means for evaporating part of the humidity of the olive vegetable water. The concentrated olive vegetable water could be provided to the mixer 301 by, for example, a low-pressure pump, another pumping mechanism, endless screws or belts, among many other transporting mechanisms.

Since the hot air exiting the drying chamber 309 at its outlet port 317 is at the drying temperature of the transformation process, i.e., at a temperature than ranges between 50 and 150°C, the powder-free air existing the bag filter 323 via its air outlet port 327 still is at a temperature similar to the drying temperature. Therefore, the thermal energy of this powder-free air can be reused for some of the previous steps of the transformation process. To do so, the system 300 further comprises a waste heat recovery system 329 or waste heat exchanger that receives the exhaust gases from the bag filter 323 and recovers the heat from said exhaust gases by transferring thermal energy from the exhaust air to the evaporator 328 to which the waste heat recovery system 329 may be in direct contact or by interposition of another thermal conductive device or fluid. Examples of waste heat recovery systems 329 may be gas to gas heat exchangers, heat pumps, gas-liquid heat exchangers and any combination thereof, or any other system, mechanism or combination of systems or mechanisms able to absorb the thermal energy from the exhaust gases from the bag filter 323 and to transfer said thermal energy to another device or sub-system. Alternatively, this recovered waste heat may be used in other steps of the drying process such as the mixing step or the drying step. By using this waste heat recovery system, the energy efficiency of the overall process is significantly increased.

In this text, the term "comprises" and its derivations (such as "comprising", etc.) should not be understood in an excluding sense, that is, these terms should not be interpreted as excluding the possibility that what is described and defined may include further elements, steps, etc. The term "another," as used herein, is defined as at least a second or more. The terms "coupled", as used herein, is defined as connected, whether directly without any intervening elements or indirectly with at least one intervening elements, unless otherwise indicated. Two elements can be coupled mechanically, electrically, or communicatively linked through a communication channel, pathway, network, or system.

The invention is obviously not limited to the specific embodiments described herein, but also encompasses any variations that may be considered by any person skilled in the art (for example, as regards the choice of materials, dimensions, components, configuration, etc.), within the general scope of the invention as defined in the claims.

## Claims

1. A method (100) for transforming a sticky fluid substance into a free-flowing soluble powder, **characterized in that** it comprises the steps of:
feeding (101) the sticky fluid substance into a mixing chamber;
mixing (102) the sticky fluid substance with at least one soluble mineral salt into the mixing chamber; and
drying (103) the mixture into a drying chamber with hot air at a drying temperature selected from a range between 50°C and 150°C, until the mixture is transformed into the free-flowing soluble powder, the drying temperature being the temperature of the hot air at the outlet of the drying chamber.

2. The method (100) according to claim 1, comprising mixing the sticky fluid substance with the at least one soluble mineral salt into the mixing chamber at a temperature that ranges between 15°C and 80°C and during a time period that ranges between 0,1 and 10 hours.

3. The method (100) according to claim 1 or 2, wherein the at least one soluble mineral salt is at least one soluble mineral fertilizer.

4. The method (100) according to claim 3, wherein the at least one mineral fertilizer is selected from a group comprising ammonium sulphate, magnesium sulphate, potassium sulphate, ammonium phosphate, diammonium phosphate, potassium phosphate, potassium chloride, ammonium chloride and any combination thereof.

5. The method (100) according to any one of the preceding claims, wherein the amount of mineral salt added to the mixture ranges from 1 to 30% in weight of the free-flowing soluble powder.

6. The method (100,200) according to any one of the preceding claims, wherein, prior to mixing the sticky fluid substance with the at least one soluble mineral salt, the method comprises filtering (202) the sticky fluid substance to eliminate particles with a size greater than 2 mm, and more preferably with a size greater than 0,2 mm.

7. The method (100,200) according to any one of the preceding claims, wherein, prior to mixing the sticky fluid substance with the at least one soluble mineral salt, the method comprises evaporating (201) at least part of the humidity contained into the sticky fluid substance.

8. The method (100) according to any one of the preceding claims, comprising:
granulating the free-flowing soluble powder in a granulating device; or
compacting the free-flowing soluble powder in a compacting device; or
pelletizing the free-flowing soluble powder in a pelletizing device.

9. A system (300) for transforming a sticky fluid substance into a free-flowing soluble powder, comprising:
a mixer (301) comprising a mixing chamber (302) that is configured to receive the sticky fluid substance and at least one soluble mineral salt, and to mix the sticky fluid substance with the at least one soluble mineral salt forming a mixture (306);
a dryer (310) comprising a drying chamber (309) that is configured to receive the mixture (306) and to dry the mixture (306) with hot air at a drying temperature that ranges between 50°C and 150°C until the mixture (306) is transformed into the free-flowing soluble powder, the drying temperature being the temperature of the hot air at the outlet (317) of the drying chamber (309); and
means (307,308) for transporting the mixture (306) from the mixing chamber (302) of the mixer (301) to the drying chamber (309) of a dryer (310).

10. The system (300) according to claim 9, comprising at least one of a cyclone (320) and a bag filter (323) that are configured to receive the hot air coming out the drying chamber (309) with the free-flowing soluble powder in suspension and to precipitate/separate the free-flowing soluble powder.

11. The system (300) according to claim 9 or 10, wherein the mixer (301) comprises heating means for heating the sticky fluid substance and at least one soluble mineral salt during mixing operation.

12. The system (300) according to any one of claims 9 to 11, comprising a filtering unit that is configured to filter the sticky fluid substance to eliminate particles with a diameter greater than 2 mm, and more preferably greater than 0,2 mm.

13. The system (300) according to any one of claims 9 to 12, wherein the dryer (310) is selected from a group comprising a Pulse Combustion Dryer, a Spray Dryer, a Spouted Bed Dryer or any combination thereof.

14. The system (300) according to any one of claims 9 to 13, comprising an atomizer unit configured to atomize the mixture (306) into the drying chamber (309) of the dryer (310), such that the atomized mixture is dried by the hot air generated by a heater of the dryer (311).

15. The system according to any one of claims 9 to 14, comprising a waste heat recovery system (329) that is configured to recover waste heat contained in the exhaust air of the dryer (310), wherein the waste heat is preferably used to feed an evaporator (328) that is configured to evaporate at least part of the humidity contained into the sticky fluid substance prior to being mixed with the at least one mineral salt.
